# EUROPÄISCHE PATENTSCHRIFT

(11) **EP 2 714 231 B1**
(45) Veröffentlichungstag und Bekanntmachung des Hinweises auf die Patenterteilung: **04.03.2015**
(21) Anmeldenummer: 12710240.8
(22) Anmeldetag: 20.03.2012
(51) Int. Cl.: F01M 11/03, F16H 57/04, B01D 35/027

(54) **ÖLFILTER EINES GETRIEBES FÜR KRAFTFAHRZEUGE**
OIL FILTER FOR A MOTOR VEHICLE GEARBOX
FILTRE A HUILE D'UNE BOITE DE VITESSES POUR VEHICULES AUTOMOBILES

(30) Priorität: 31.05.2011 DE 102011076760
(43) Veröffentlichungstag der Anmeldung: 09.04.2014
(73) Patentinhaber: ZF Friedrichshafen AG, 88038 Friedrichshafen (DE)
(72) Erfinder: SCHNEIDER, Thomas, 88069 Tettnang (DE); BRUSSA, Stephan, 88085 Langenargen (DE); VAFIADIS, Dimitrios, 88085 Langenargen (DE)
(86) Internationale Anmeldenummer: PCT/EP2012/054885
(87) Internationale Veröffentlichungsnummer: WO 2012/163558

(56) Entgegenhaltungen:
- EP-A2- 1 752 687
- WO-A2-01/63100
- JP-A- 2004 332 886
- JP-A- 2011 174 413
- US-A1- 2006 175 239

## Beschreibung

Die Erfindung betrifft ein Ölfilter eines Getriebes für Kraftfahrzeuge nach dem Oberbegriff des Patentanspruches 1.

Bekannte Ölfilter für Motor- oder Getriebeöl weisen ein Filtergehäuse auf, welches aus zwei umfangseitig miteinander verbundenen Halbschalen und einem eingeklemmten Filtermedium besteht. Das Filtergehäuse weist eine Eintrittskammer für ungefiltertes Öl und eine Austrittskammer für gefiltertes Öl auf, wobei Ein- und Austrittskammer durch das Filtermedium getrennt sind. Bei Saugfiltern wird das ungefilterte Öl durch das Filtermedium gesaugt und so gereinigt.

Durch die DE 197 35 445 A1 wurde ein Ölfilter mit einem Filtergehäuse bekannt, welches in die Ölwanne des Getriebes integriert ist. Das bekannte Ölfilter weist zwei Kammern auf, nämlich eine Eintrittskammer für ungefiltertes Öl und eine Austrittskammer für gefiltertes Öl. Die Eintrittskammer wird auf ihrer Unterseite durch den Boden der Ölwanne gebildet, während die Austrittskammer durch eine Kunststoffhalbschale gebildet wird. Zwischen der Eintrittskammer und der Austrittskammer ist ein Filtermedium eingeklemmt. Die Eintrittsöffnung für ungefiltertes Öl befindet sich am Boden der Ölwanne, während die Austrittsöffnung durch einen Stutzen der oberen Kunststoffschale gebildet wird.

Das Dokument JP 2004-332886 A offenbart alle Merkmale des Oberbegriffs des Anspruchs 1 und bildet damit den nächstliegenden Stand der Technik.

Probleme bei der Gestaltung eines Olfilters können sich bei speziellen Einbauverhältnissen ergeben, beispielsweise, wenn zwei Austrittsöffnungen für das Ölfilter erforderlich werden und gleichzeitig Einbauhindernisse vorliegen oder nur ein beengter Bauraum zur Verfügung steht.

Es ist Aufgabe der vorliegenden Erfindung, derartigen Problemen durch eine geeignete Gestaltung des Ölfilters Rechnung zu tragen.

Die Aufgabe der Erfindung wird durch die Merkmale des Patentanspruches 1 gelöst. Vorteilhafte Ausgestaltungen ergeben sich aus den Unteransprüchen.

Erfindungsgemäß weist das Gehäuse zwei miteinander verbundene Halbschalen, vorzugsweise aus Kunststoff auf, nämlich eine Unterschale und eine Oberschale, wobei sich in der Unterschale eine Eintrittsöffnung und in der Oberschale zwei Austrittsöffnungen befinden. Die beiden Austrittsöffnungen, deren Abstand voneinander vorgegeben ist, sind für unterschiedliche Sauganschlüsse vorgesehen.

Nach einer bevorzugten Ausführungsform wird durch die Unterschale eine erste Kammer für ungefiltertes Öl, und durch die Oberschale werden eine zweite und dritte Kammer, denen jeweils eine Austrittsöffnung zugeordnet ist, für ungefiltertes Öl gebildet. Das Filtergehäuse weist somit eine Eintrittskammer für ungefiltertes Öl und zwei Austrittskammern für gefiltertes Öl auf, wobei das Filtermedium die Eintrittskammer überdeckt. Für die Oberschale ergibt sich aufgrund der zwei nebeneinander angeordneten Austrittskammern eine größere Breite als für die Unterschale, welche nur eine Eintrittskammer aufweist.

Nach einer weiteren bevorzugten Ausführungsform ist das Filtermedium umfangsseitig zwischen der Eintrittskammer in der Unterschale und der ersten Austrittskammer in der Oberschale eingespannt. Das Filtermedium, beispielsweise ein Vlies erstreckt sich also nicht über die gesamte Breite der Oberschale, woraus sich eine Material- und Kostenersparnis ergibt.

Erfindungsgemäß weisen sowohl die Unterschale als auch die Oberschale jeweils einen umlaufenden Flansch zur stoffschlüssigen Verbindung beider Schalen auf, wobei zwischen den beiden Austrittsöffnungen und dem umlaufenden Flansch der Oberschale ein Brückenflansch angeordnet ist, welcher das Filtermedium zwischen sich und der Unterschale dichtend einspannt. Damit wird erreicht, dass das Filtermedium rund um den Bereich der Eintrittskammer eingespannt ist.

Erfindungsgemäß ist der Brückenflansch über Stege, welche zwischen sich Durchflussöffnungen belassen, mit der Oberschale verbunden. Damit werden zwei Funktionen erreicht, nämlich einerseits die Einspannung des Filtermediums zwischen Ober- und Unterschale und andererseits die Ausbildung eines Durchflussquerschnittes zwischen den beiden Austrittskammern in der Oberschale.

Nach einer weiteren bevorzugten Ausführungsform ist dem Brückenflansch der Oberschale ein Zwischenflansch der Unterschale zugeordnet. Der Zwischenflansch bildet mit dem umlaufenden Flansch der Unterschale eine durchgehende Dichtebene für die Einspannung des Filtermediums.

Nach einer weiteren bevorzugten Ausführungsform weist das Filtergehäuse im Bereich der zweiten Austrittskammer eine um den Betrag ΔH reduzierte Bauhöhe gegenüber der Bauhöhe H im Bereich der Eintrittskammer und der ersten Austrittskammer auf. Die Unterschale weist im Bereich des Brückenflansches einen Absatz auf und verläuft vom Brückenflansch bis zum äußeren Flansch etwa auf der Höhe der Flanschebene. Dadurch ergibt sich unterhalb der zweiten Austrittskammer, d. h. unterhalb des zweiten Austrittsstutzens die erwähnte Reduzierung der Bauhöhe.

Nach einer weiteren bevorzugten Ausführungsform sind die beiden Austrittsöffnungen in der Oberschale als Stutzen ausgeformt. Damit ist es möglich, eine einfache Steckverbindung mit den Ölanschlussleitungen herzustellen.

Nach einer weiteren bevorzugten Ausführungsform ist das Ölfilter als Saugfilter für zwei Ölpumpen betreibbar. Die Saugstutzen der Ölpumpen weisen den gleichen Abstand wie die Austrittsstutzen des Filtergehäuses auf und können somit relativ einfach durch Stecken montiert werden.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: ein erfindungsgemäßes Ölfilter mit zwei Austrittsstutzen und partiell reduzierter Bauhöhe und
- Fig. 2: einen Schnitt im Bereich der Ebene II-II in Fig. 1.

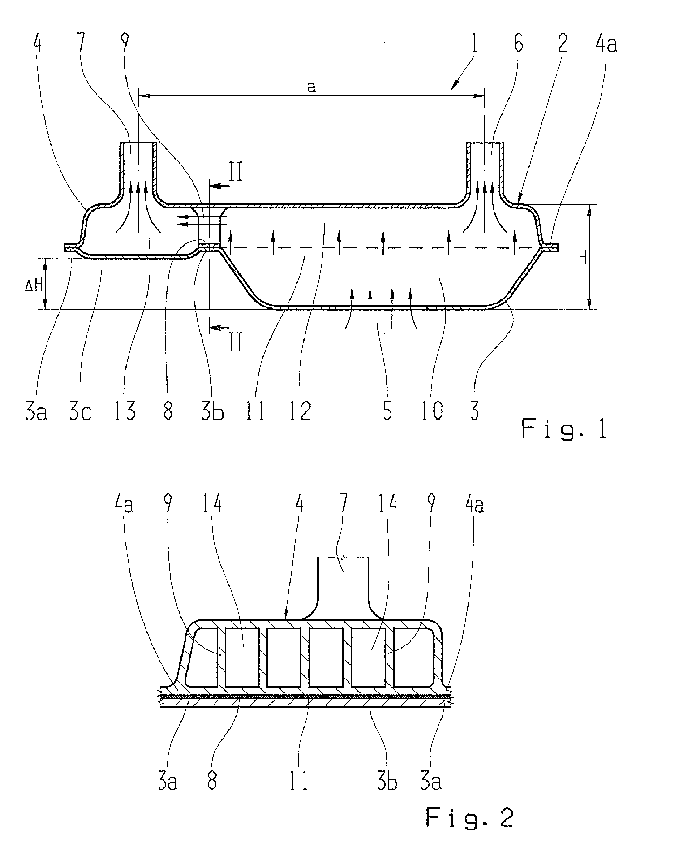

Fig. 1 zeigt ein Ölfilter 1, welches für Getriebe von Kraftfahrzeugen verwendbar ist und im Bereich einer nicht dargestellten Ölwanne des Getriebes angeordnet werden kann. Das Ölfilter 1 umfasst ein Filtergehäuse 2, welches aus zwei Schalen aufgebaut ist, nämlich einer Unterschale 3 und einer Oberschale 4. Die Unterschale 3 weist einen umlaufenden Flansch 3a und eine Eintrittsöffnung 5 auf, welche im unteren Bereich der Unterschale 3 angeordnet ist. Die Oberschale 4 weist ebenfalls einen umlaufenden Flansch 4a auf, welcher mit dem Flansch 3a der Unterschale 3 stoffschlüssig, beispielsweise durch Schweißen dicht verbunden ist. In der Oberschale 4 sind zwei als Stutzen 6, 7 ausgebildete Austrittsöffnungen angeordnet. Mit der Oberschale 4 ist ein Brückenflansch 8 über Stege 9 einstückig verbunden. Die Unterschale 3 weist eine trogartige Eintrittskammer 10 auf, welche nach oben durch ein Filtermedium 11, vorzugsweise als Vlies ausgebildet, begrenzt wird. Durch die Oberschale 4 werden eine erste Austrittskammer 12 sowie eine zweite Austrittskammer 13 gebildet, welche über Durchlassöffnungen (vgl. Fig. 2) zwischen den Stegen 9 miteinander in Strömungsverbindung stehen. Der ersten Austrittskammer 12 ist der erste Austrittsstutzen 6 und der zweiten Austrittskammer 13 ist der zweite Austrittsstutzen 7 zugeordnet. Das Filtermedium 11 ist zwischen Unterschale 3 und Oberschale 4 eingespannt, und zwar einerseits zwischen den umlaufenden Flanschen 3a, 4a und andererseits zwischen dem Brückenflansch 8 und einem korrespondierenden Flanschbereich 3b der Unterschale 3, genannt Zwischenflansch 3b. Die zweite Austrittskammer 13 ist durch einen Boden 3c, der Teil der Unterschale 3 ist, abgeschlossen.

Fig. 2 zeigt einen Schnitt in der Ebene II-II, eingezeichnet in Fig. 1. Der Brückenflansch 8 erstreckt sich zwischen dem umlaufenden Flansch 4a der Oberschale 4 und bildet mit dem umlaufenden Flansch 4a eine durchgehende Dichtebene. Analog ist an der Unterschale 3 der Zwischenflansch 3b angeformt, welcher in den äußeren Bereichen in den umlaufenden Flansch 3a übergeht. Zwischen dem Brückenflansch 8 und dem Zwischenflansch 3b ist das Filtermedium 11 dichtend eingespannt. Zwischen den Stegen 9, welche der Versteifung des Brückenflansches 8 dienen, sind Durchflussöffnungen 14 belassen, durch welche das gefilterte Öl von der ersten Austrittskammer 12 in die zweite Austrittskammer 13 strömt.

Die Ausbildung des Filtergehäuses 2 ist für zwei separate Sauganschlüsse, vorzugsweise zwei Saugstutzen von nicht dargestellten Ölpumpen vorgesehen. Der mit a in Fig. 1 eingezeichnete Abstand der Austrittsstutzen 6, 7 ist vorgegeben. Daraus ergibt sich eine vorgegebene Breite für das Filtergehäuse 2. Andererseits kann diese Breite im Bereich der Unterschale 3 aus Einbaugründen nicht eingehalten werden. Die maximale Bauhöhe des Filtergehäuses 2 - ohne Austrittsstutzen 6, 7 - entspricht der Bauhöhe der Eintrittskammer 10 und der ersten Austrittskammer 12 und ist in der Zeichnung mit H angedeutet. Demgegenüber ist die Bauhöhe des Filtergehäuses 2 im linken Bereich der Zeichnung, d. h. unterhalb des Bodens 3c der zweiten Austrittskammer 13 um das Maß ΔH reduziert. Das Filtergehäuse 2 ist aufgrund vorgegebener Einbaubedingungen in diesem Bereich ausgespart, andererseits ist der vorgegebene Abstand a zwischen den beiden Austrittsstutzen 6, 7 eingehalten worden.

Unterschale 3 und Oberschale 4 sind vorzugsweise aus Kunststoff hergestellt und jeweils als Spritzteile ausgebildet.

Der Ölfluss erfolgt - entsprechend den Strömungspfeilen in Fig. 1 - in der Weise, dass zunächst ungefiltertes Öl (welches sich in einer nicht dargestellten Ölwanne gesammelt hat) durch die untere Eintrittsöffnung 5 in die Eintrittskammer 10 eintritt und von dort nach oben durch das Filtermedium 11 abgesaugt wird. Das gefilterte Öl gelangt dann zunächst in die erste Austrittskammer 12, von wo aus sich der Ölstrom verzweigt: ein Teil wird über den Austrittsstutzen 6 über eine erste Pumpe abgesaugt, und ein anderer Teil durchströmt die Durchlassöffnungen 14 (vgl. Fig. 2), gelangt in die zweite Austrittskammer 13 und wird von dort über den Austrittsstutzen 7 von einer zweiten Pumpe abgesaugt. Das Ölfilter 1 wird somit vorzugsweise als Saugfilter betrieben. Die in Fig. 1 im Bodenbereich angeordnete Eintrittsöffnung 5 kann auch in einer Seitenwand der Unterschale 3 vorgesehen sein.

### Bezugszeichen

- 1: Ölfilter
- 2: Filtergehäuse
- 3: Unterschale
- 3a: Flansch
- 3b: Zwischenflansch
- 3c: Boden
- 4: Oberschale
- 4a: Flansch
- 5: Eintrittsöffnung
- 6: Austrittsöffnung
- 7: Austrittsöffnung
- 8: Brückenflansch
- 9: Steg
- 10: Eintrittskammer
- 11: Filtermedium
- 12: erste Austrittskammer
- 13: zweite Austrittskammer
- 14: Durchtrittsöffnung

- a: Stutzenabstand
- H: Bauhöhe
- ΔH: reduzierte Bauhöhe

## Patentansprüche

1. Ölfilter (1) eines Getriebes für Kraftfahrzeuge, umfassend ein Filtergehäuse (2), mindestens eine Eintrittsöffnung (5) für ungefiltertes Öl, mindestens eine Austrittsöffnung (6) für gefiltertes Öl sowie ein Filtermedium (11), welches im Ölfluss zwischen der mindestens einen Eintrittsöffnung (5) und der mindestens einen Austrittsöffnung (6) angeordnet ist, wobei das Filtergehäuse (2) aus zwei miteinander verbundenen Schalen, einer Unterschale (3) und einer Oberschale (4), gebildet ist und eine zweite Austrittsöffnung (7) aufweist, wobei die Unterschale (3) und die Oberschale (4) jeweils einen umlaufenden Flansch (3a, 4a) zur stoffschlüssigen Verbindung beider Schalen (3, 4) aufweisen und dass zwischen beiden Austrittsöffnungen (6, 7) und dem umlaufenden Flansch (4a) der Oberschale (4) ein Brückenflansch (8) angeordnet ist, **dadurch gekennzeichnet, dass** der Brückenflansch (8) über Stege (9), welche zwischen sich Durchflussöffnungen (14) belassen, mit der Oberschale (4) verbunden ist.

2. Ölfilter nach Anspruch 1, **dadurch gekennzeichnet, dass** die mindestens eine Eintrittsöffnung (5) in der Unterschale (3) und die beiden Austrittsöffnungen (6, 7) in der Oberschale (4) angeordnet sind.

3. Ölfilter nach Anspruch 1 oder, 2, **dadurch gekennzeichnet, dass** durch die Unterschale (3) eine Eintrittskammer (10) für ungefiltertes Öl und durch die Oberschale (4) eine erste Austrittskammer (12) mit der Austrittsöffnung (6) und eine zweite Austrittskammer (13) mit der Austrittsöffnung (7) für gefiltertes Öl gebildet werden.

4. Ölfilter nach Anspruch 3, **dadurch gekennzeichnet, dass** das Filtermedium (11) zwischen der Eintrittskammer (10) und der ersten Austrittskammer (12) umfangsseitig eingespannt ist.

5. Ölfilter nach Anspruch 4, **dadurch gekennzeichnet, dass** dem Brückenflansch (8) ein Zwischenflansch (3b) der Unterschale (3) zugeordnet ist.

6. Ölfilter nach einem der vorhergehenden Ansprüche, **dadurch gekennzeichnet, dass** das Filtergehäuse (2) im Bereich der zweiten Austrittskammer (13) eine um den Betrag ΔH reduzierte Bauhöhe gegenüber der Bauhöhe H im Bereich der Eintrittskammer (10) und der ersten Austrittskammer (12) aufweist.

7. Ölfilter nach Anspruch 6, **dadurch gekennzeichnet, dass** die reduzierte Bauhöhe ΔH der Bauhöhe der Eintrittskammer (10) der Unterschale (3) entspricht.

8. Ölfilter nach einem der Ansprüche 1 bis 7, **dadurch gekennzeichnet, dass** die Austrittsöffnungen in der Oberschale (4) als Stutzen (6, 7) ausgeformt sind.

9. Ölfilter nach einem der Ansprüche 1 bis 8, **dadurch gekennzeichnet, dass** Ölfilter als Saugfilter für zwei Ölpumpen betreibbar ist.

## Claims

1. Oil filter (1) of a transmission for motor vehicles, comprising a filter housing (2), at least one inlet opening (5) for unfiltered oil, at least one outlet opening (6) for filtered oil and a filter medium (11) which is arranged in the oil flow between the at least one inlet opening (5) and the at least one outlet opening (6), wherein the filter housing (2) is formed from two interconnected shells, a lower shell (3) and an upper shell (4), and has a second outlet opening (7), wherein the lower shell (3) and the upper shell (4) in each case have a peripheral flange (3a, 4a) for connecting the two shells (3, 4) in an integrally bonded manner and wherein a bridge flange (8) is arranged between the two outlet openings (6, 7) and the peripheral flange (4a) of the upper shell (4), **characterized in that** the bridge flange (8) is connected to the upper shell (4) via webs (9) which leave through-flow openings (14) between them.

2. Oil filter according to Claim 1, **characterized in that** the at least one inlet opening (5) is arranged in the lower shell (3) and the two outlet openings (6, 7) are arranged in the upper shell (4).

3. Oil filter according to Claim 1 or 2, **characterized in that** an inlet chamber (10) for unfiltered oil is formed by the lower shell (3) and a first outlet chamber (12) with the outlet opening (6) and a second outlet chamber (13) with the outlet opening (7) for filtered oil are formed by the upper shell (4).

4. Oil filter according to Claim 3, **characterized in that** the filter medium (11) is clamped in circumferentially between the inlet chamber (10) and the first outlet chamber (12).

5. Oil filter according to Claim 4, **characterized in that** the bridge flange (8) is assigned an intermediate flange (3b) of the lower shell (3).

6. Oil filter according to one of the preceding claims, **characterized in that**, in the region of the second outlet chamber (13), the filter housing (2) has an overall height reduced by the amount ΔH with respect to the overall height H in the region of the inlet chamber (10) and the first outlet chamber (12).

7. Oil filter according to Claim 6, **characterized in that** the reduced overall height ΔH corresponds to the overall height of the inlet chamber (10) of the lower shell (3).

8. Oil filter according to one of Claims 1 to 7, **characterized in that** the outlet openings are formed as stubs (6, 7) in the upper shell (4).

9. Oil filter according to one of Claims 1 to 8, **characterized in that** the oil filter can be operated as a suction filter for two oil pumps.

## Revendications

1. Filtre à huile (1) d'une transmission de véhicules automobiles, comprenant un carter de filtre (2), au moins une ouverture d'entrée (5) pour de l'huile non filtrée, au moins une ouverture de sortie (6) pour de l'huile filtrée ainsi qu'un milieu filtrant (11), qui est disposé dans le flux d'huile entre l'au moins une ouverture d'entrée (5) et l'au moins une ouverture de sortie (6), le carter de filtre (2) étant formé de deux coques connectées l'une à l'autre, une coque inférieure (3) et une coque supérieure (4), et présentant une deuxième ouverture de sortie (7), la coque inférieure (3) et la coque supérieure (4) présentant chacune une bride périphérique (3a, 4a) pour la connexion par liaison de matière des deux coques (3, 4) et une bride formant pont (8) étant disposée entre les deux ouvertures de sortie (6, 7) et la bride périphérique (4a) de la coque supérieure (4), **caractérisé en ce que** la bride formant pont (8) est connectée à la coque supérieure (4) par le biais de nervures (9) formant entre elles des ouvertures de passage (14).

2. Filtre à huile selon la revendication 1, **caractérisé en ce que** l'au moins une ouverture d'entrée (5) est disposée dans la coque inférieure (3) et les deux ouvertures de sortie (6, 7) sont disposées dans la coque supérieure (4).

3. Filtre à huile selon la revendication 1 ou 2, **caractérisé en ce que** la coque inférieure (3) forme une chambre d'entrée (10) pour de l'huile non filtrée et la coque supérieure (4) forme une première chambre de sortie (12) avec l'ouverture de sortie (6) et une deuxième chambre de sortie (13) avec l'ouverture de sortie (7) pour de l'huile filtrée.

4. Filtre à huile selon la revendication 3, **caractérisé en ce que** le milieu filtrant (11) est serré du côté périphérique entre la chambre d'entrée (10) et la première chambre de sortie (12).

5. Filtre à huile selon la revendication 4, **caractérisé en ce qu'**une bride intermédiaire (3b) de la coque inférieure (3) est associée à la bride formant pont (8).

6. Filtre à huile selon l'une quelconque des revendications précédentes, **caractérisé en ce que** le carter de filtre (2), dans la région de la deuxième chambre de sortie (13), présente une hauteur de construction réduite de la valeur ΔH par rapport à la hauteur de construction H dans la région de la chambre d'entrée (10) et de la première chambre de sortie (12).

7. Filtre à huile selon la revendication 6, **caractérisé en ce que** la hauteur de construction réduite ΔH correspond à la hauteur de construction de la chambre d'entrée (10) de la coque inférieure (3).

8. Filtre à huile selon l'une quelconque des revendications 1 à 7, **caractérisé en ce que** les ouvertures de sortie sont formées dans la coque supérieure (4) sous forme de tubulures (6, 7).

9. Filtre à huile selon l'une quelconque des revendications 1 à 8, **caractérisé en ce que** le filtre à huile peut fonctionner en tant que filtre d'aspiration pour deux pompes à huile.
